(19) Europäisches Patentamt

European Patent Office

Office européen des brevets

(11) **EP 0 716 140 B1**

(12) **FASCICULE DE BREVET EUROPEEN**

(45) Date de publication et mention
de la délivrance du brevet:
**15.02.2006 Bulletin 2006/07**

(51) Int Cl.:
***C10L 3/10*** (2006.01)

(21) Numéro de dépôt: **95203131.8**

(22) Date de dépôt: **16.11.1995**

(54) **Utilisation d'agglomérés zéolitiques au moyen d'argiles du groupe de la kaolinite pour le séchage de gaz contenant des traces d'amines**

Anwendung von zeolitischen Agglomeraten von kaolinitischen Tonen beim Trocknen von Gasen welche Spuren von Aminen enthalten

Use of zeolitic agglomerates of clays of the kaolinitic group for drying gases containing traces of amines

(84) Etats contractants désignés:
**AT BE CH DE DK ES FR GB GR IE IT LI LU NL PT SE**
Etats d'extension désignés:
**LT LV SI**

(30) Priorité: **22.11.1994 FR 9413956**

(43) Date de publication de la demande:
**12.06.1996 Bulletin 1996/24**

(73) Titulaire: **CECA S.A.**
**92800 Puteaux (FR)**

(72) Inventeurs:
• **Plee, Dominique**
**F-64320 Bizanos (FR)**

• **Voirin, Robert**
**F-64300 Orthez (FR)**

(74) Mandataire: **Treuil, Claude et al**
**ARKEMA**
**Département Propriété Industrielle**
**4-8, cours Michelet,**
**La Défense 10**
**92091 Paris La Défense Cedex (FR)**

(56) Documents cités:
**GB-A- 2 079 307          US-A- 5 089 034**
**US-A- 5 292 360**

## Description

Les gaz acides, naturels ou de synthèse, sont usuellement traités dans des unités de lavage aux amines en vue d'abaisser leur teneur en composés acides (H2S, CO2, etc.) Les gaz ainsi épurés sont chargés d'humidité. On les dessèche par passage sur tamis moléculaires granulés. La technique a retenu pour le séchage des gaz les zéolites de type A ou X granulées avec des mélanges de liants dont les attapulgites et les bentonites. On constate des pertes de charge importantes dans les unités de séchage affectées au traitement des gaz naturels, unités situées en aval des unités de désacidification. Cet effet est en relation avec un effritement prématuré de la zéolite.

Les composés responsables de ce défaut de résistance mécanique sont les amines utilisées pour la désacidification, telles que la diisopropanolamine (DIPA), le 2-(2-aminoéthoxy)éthanol autrement nommé diéthylèneglycolamine (DIGA), la diéthanolamine (DEA), la méthyldiéthanolamine (MDEA), et à un degré moindre la soude, qui sont entraînées dans les gaz épurés, et qu'il n'est pas possible d'intercepter totalement par interposition de séparateurs car elles sont, en partie au moins, sous forme d'aérosols. EP-A-0 511 885 décrit l'utilisation des zéolites A ou X agglomérés au kaolin dans l'épuration dynamique des gaz naturels contenant des mercaptans.

La présente invention apporte une solution à ce problème avec l'utilisation dans ce cas d'espèce d'adsorbants zéolitiques à base de zéolite de type A ou X agglomérés avec des argiles appartenant à la famille des kaolinites, tel que defini dans le libellé de la revendication indépendente 1. Les revendications dépendentes 2 à 9 concernent des caractéristiques aditionnelles de l'invention.

Le kaolin est utilisée pour l'agglomération des zéolites. Mais on a récemment constaté que de façon inattendue, on pouvait remarquablement allonger la durée de fonctionnement des unités de séchage de gaz contenant des traces d'amines en provenance d'unités de désacidification situées en amont par rapport à d'autres types d'adsorbants liés au moyen d'argiles différentes. Les unités de séchage fonctionnent par cycles adsorption / désorption thermique (TSA) et le tamis moléculaire souffre principalement lors de la phase de régénération qui s'effectue à des températures pouvant atteindre jusqu'à 300°C. Cet allongement de la durée de fonctionnement est dû pour l'essentiel à une meilleure résistance mécanique des tamis agglomérés au moyen d'argiles du type de la kaolinite, d'où il résulte un ralentissement significatif de l'augmentation de la perte de charge qui est due à la formation de fines particules. Ainsi l'utilisation d'argiles du type du kaolin permet-elle, lorsque les gaz à traiter contiennent des amines, d'augmenter la durée de vie de l'adsorbant jusqu'à la doubler, ce qui se traduit par une économie importante sur le coût de fonctionnement de l'installation.

Les caractéristiques des argiles de la famille de la kaolinite, utiles pour atteindre l'objectif de l'invention ont une composition chimique qui peut être (exprimée sur équivalent calciné à 900°C):

| | |
|---|---|
| SiO2 | 50-58% |
| Al2O3 | 34-54% |
| MgO | <2% |
| K2O + Na2O | <2% |
| CaO | <1% |
| Fe2O3 | <2% |

Parmi ces argiles, on utilise en particulier la kaolinite proprement dite, l'halloysite, la dickite, la nacrite.

Pour réaliser les adsorbants utiles pour l'invention, on mélange d'abord à sec les.poudres de zéolites et d'argile du type kaolin, auxquelles on peut ajouter des additifs organiques tels que les lignosulfonates de sodium, de calcium, etc., ou des tanins issus du québracho et un agent de rétention de l'eau de la famille des polysaccharides. Le mélange homogénéisé est mouillé avec de l'eau et malaxé de façon à obtenir une pâte homogène et extrudable. L'extrusion est pratiquée sur des matériels bien connus de l'homme de l'art, par exemple une presse hydraulique à piston équipée de filières de géométries diverses. Les extrudés sont séchés à 100-200°C puis durcis par une calcination à des températures comprises entre 400°C et 650°C°. La quantité de liant contenu dans les agglomérés de l'invention peut varier entre 5 et 50% en poids.

L'adsorbant ainsi obtenu est soumis à une série de cycles d'adsorption /désorption simulant les conditions de fonctionnement industrielles et dont la durée est fonction des performances désirées (capacité en eau en particulier).

Les exemples ci-après illustrent l'invention.

### Exemple 1

Cet exemple compare les résistances à l'attaque basique de tamis moléculaires 4A agglomérés au moyen de mélanges d'argiles comprenant une argile fibreuse de la classe des hormites (attalpugite, sépiolite, etc.) et une argile lamellaire de la classe des smectites (montmorillonites), avec les résistances de tamis agglomérés avec des liants selon l'invention.

Cinq grammes de tamis 4A agglomérés respectivement à l'aide d'un mélange des liants tels que ci-dessus, ici repérés par M et un liant kaolinite, sont mis en présence de 2,9- g de diéthylèneglycolamine (DIGA) et de 7,5 g d'eau en autoclave à 240°C. On observe à intervalles réguliers, l'évolution de leur capacité en eau et l'éventuelle formation de fines.

Evolution de la capacité en eau

| capacité en eau | Mélange M | Kaolinite |
|---|---|---|
| Initiale | 22% | 21,5% |
| Après 48h | 11,3% | 11,5% |
| Après 120h | 10,3% | 10,5% |

Effritement

| Pourcentage de fines | Mélange M | Kaolin |
|---|---|---|
| Après 48h | 0 | 0 |
| Après 120h | 16% | 9% |

Des résultats très voisins ont été observés sur les granulés mis en présence de soude. Ils confirment une meilleure résistance mécanique des tamis agglomérés au moyen de kaolin.

Exemple 2

L'exemple concerne les performances dynamiques d'extrudés de 1,6 mm de diamètre.

On effectue des cycles comparatifs de séchage d'un gaz composé d'azote contenant 650 ppm $H_2O$ (soit 90% de la saturation) et 11 ppm de diéthyléneglycolamine. La dimension des adsorbeurs est : hauteur = 2 m ; diamètre = 2,7 cm. Ils sont chargés de tamis moléculaires de type 4A agglomérés traditionnellement avec le mélange d'argiles déjà évoqué ou une argile du type de la kaolinite, conformément à l'invention. La quantité de tamis moléculaire introduit est telle que la couche atteint 1,5 m. Les conditions de procédé sont

- en adsorption :

température = 30°C,
pression = 60 bars,
vitesse linéaire = 15 cm/s (conditions réelles, fût vide);

- en régénération :

température 250°C,
pression 60 bars,
vitesse linéaire 3,5 cm/s (conditions réelles, fût vide), le gaz de régénération étant l'azote

2a) Mesure de l'évolution des pertes de charge

On mesure comparativement l'évolution de la perte de charge. La perte de charge est normalisée à un mètre de lit de tamis moléculaire selon la relation

$$[(\Delta P \text{ cycle } 1) - (\Delta P \text{ cycle } n)]/1,5m$$

Le tableau suivant rassemble des résultats de perte de charge en mbar par mètre de lit :

| Nb. de cycles | 3 | 5 | 7 | 9 |
|---|---|---|---|---|
| 4A mélange M | 20 | 62 | 72 | 97 |
| 4A Kaolin | 13 | 22 | 30 | 40 |

L'évolution de la perte de charge est très sensiblement réduite sur tamis aggloméré au kaolin. En outre, au déchargement, on observe, d'une part un collage des extrudés au mélange M, tandis que les extrudés au kaolin restaient pratiquement tous libres entre eux.

2b) Caractéristiques dynamiques

Au cours du même essai, on a déterminé l'évolution du transfert de masse et des capacités en eau. Les résultats correspondant à treize cycles de fonctionnement sont consignés ci-après. Les hauteurs de zone de transfert de masse (HZTM)y sont exprimées en centimètres, et les capacités en eau en grammes d'eau pour 100 g d'adsorbant au temps de rupture correspondant à 30 ppm d'eau dans les gaz de sortie du sécheur.

| Adsorbant | 4A kaolin | 4A mélange M |
|---|---|---|
| HZTM | 87 | 120 |
| Capacités en eau | 11 | 13,5 |

Exemple 3

On a opéré de la même façon que dans l'exemple 2 en remplaçant la diéthylèneglycolamine par de la diisopropanolamine.

3a) Mesure de l'évolution des pertes de charge

Les résultats des pertes de charge en mbar / m de lit en fonction du nombre de cycles, sont présentés dans le tableau ci-dessous.

| Nb. de cycles | 9 | 10 | 12 | 16 |
|---|---|---|---|---|
| 4A mélange M | 10 | 51 | 70 | 70 |
| 4A Kaolin | 14 | 20 | 28 | - |

3b) Caractéristiques dynamiques

On a déterminé, comme dans l'exemple 2b) l'évolution de la zone de transfert de masse et des capacités en eau sur treize cycles de fonctionnement. Les résultats sont reportés ci-après.

| Adsorbant | 4A kaolin | 4A mélange M |
|---|---|---|
| HZTM (cm) | 17 | 50 |
| Capacités en eau | 20 | 17 |

L'effet de résistance dû à l'agglomération avec du kaolin est ici encore très sensible sur le maintien d'une perte de charge réduite. Par ailleurs, la capacité d'adsorption d'eau est maintenue, contrairement au cas présenté dans l'exemple 2. Cela tient probablement à la différence de réactivité des deux amines vis-à-vis des extrudés de tamis moléculaire.

Exemple 4

On procède de la même façon que dans l'exemple 2, en utilisant l'halloysite comme liant d'agglomération, tous les autres facteurs étant gardés constants. L'halloysite est une kaolinite qui a la particularité de contenir de l'eau d'hydratation entre ses feuillets.

Les résultats variation de la capacité d'adsorption d'eau et des pertes de charge, en mbar / m de lit sont présentés dans le tableau ci-dessous.

| Nb. de cycles | 3 | 7 | 11 | 16 |
|---|---|---|---|---|
| 4A mélange M | | | | |
| $C_{eau}$ % | 18 | 15 | 14 | 13,5 |
| $\Delta P$ (mbar/m) | 20 | 85 | 103 | 126 |
| | | | | |
| 4A Halloysite | | | | |
| $C_{eau}$ % | 15 | 16 | 13 | 13 |
| $\Delta P$ (mbar/m) | 7 | 18 | 20 | 22 |

Il apparaît également ici une influence bénéfique du liant d'agglomération de type halloysite sur le maintien des propriétés mécaniques. On remarquera que les pertes de charge restent étonnament basses.

**Revendications**

1. Utilisation de zéolite A ou X agglomérée par une ou des argiles du groupe de la kaolinite, comme agent adsorbant l'eau pour le séchage de gaz acides, naturels ou de synthèse, contenant des traces d'amines et éventuellement des traces de soude entraînées à partir d'unités amont de désacidification dans une unité fonctionnant selon une série de cycles adsorption/désorption thermique.

2. Utilisation de zéolite agglomérée par une ou des argiles comme adsorbant selon la revendication 1, **caractérisée en ce que** la zéolite est de type 3 A ou 4 A.

3. Utilisation de zéolite agglomérée par une ou des argiles comme adsorbant selon la revendication 1, **caractérisée en ce que** la zéolite est de type X.

4. Utilisation de zéolite agglomérée par une ou des argiles comme adsorbant selon la revendication 1 à 3, **caractérisée en ce que** la teneur de l'adsorbant en argile est comprise entre 5 et 50 % en poids.

5. Utilisation de zéolite agglomérée par une ou des argiles comme adsorbant selon l'une quelconque des revendications 1 à 4, **caractérisée en ce que** l'argile est de l'halloysite.

6. Utilisation de zéolite agglomérée par une ou des argiles comme adsorbant selon l'une quelconque des revendications 1 à 5 quand lesdites traces d'amines sont des traces de diisopropanolamine.

7. Utilisation de zéolite agglomérée par une ou des argiles comme adsorbant selon l'une quelconque des revendications 1 à 5 quand lesdites traces d'amines sont des traces de méthyldiéthanolamine.

8. Utilisation de zéolite agglomérée par une ou des argiles comme adsorbant selon l'une quelconque des revendications 1 à 5 quand lesdites traces d'amines sont des traces de diéthylèneglycolamine.

9. Utilisation de zéolite agglomérée par une ou des argiles comme adsorbant selon l'une quelconque des revendications 1 à 5 quand lesdites traces d'amines sont des traces de diéthanotamine.

**Patentansprüche**

1. Verwendung von Zeolith A oder X, der durch einen oder mehrere Tone aus der Gruppe mit Kaolinit agglomeriert ist, als Adsorptionsmittel für Wasser zum Trocknen von sauren, natürlichen oder Synthese-Gasen, die mitgerissene Spuren von Aminen und gegebenenfalls Spuren von Schwefel enthalten, aus stromaufwärts gelegenen Entsäuerungsvorrichtungen in einer Vorrichtung, die gemäß einer Reihe von thermischen Adsorptions-/Desorptionszyklen arbeitet.

2. Verwendung von durch einen oder mehrere Tone agglomeriertem Zeolith als Adsorptionsmittel nach Anspruch 1, **dadurch gekennzeichnet, dass** der Zeolith vom Typ 3 A oder 4 A ist.

3. Verwendung von durch einen oder mehrere Tone agglomeriertem Zeolith als Adsorptionsmittel nach Anspruch 1, **dadurch gekennzeichnet, dass** der Zeolith vom Typ X ist.

4. Verwendung von durch einen oder mehrere Tone agglomeriertem Zeolith als Adsorptionsmittel nach Anspruch 1 bis 3, **dadurch gekennzeichnet, dass** der Gehalt des Adsorptionsmittels an Ton zwischen 5 und 50 Gew.-% beträgt.

5. Verwendung von durch einen oder mehrere Tone agglomeriertem Zeolith als Adsorptionsmittel nach einem der Ansprüche 1 bis 4, **dadurch gekennzeichnet, dass** der Ton Halloysit ist.

6. Verwendung von durch einen oder mehrere Tone agglomeriertem Zeolith als Adsorptionsmittel nach einem der Ansprüche 1 bis 5, wenn die Spuren von Aminen Spuren von Diisopropanolamin sind.

7. Verwendung von durch einen oder mehrere Tone agglomeriertem Zeolith als Adsorptionsmittel nach einem der Ansprüche 1 bis 5, wenn die Spuren von Aminen Spuren von Methyldiethanolamin sind.

8. Verwendung von durch einen oder mehrere Tone agglomeriertem Zeolith als Adsorptionsmittel nach einem der Ansprüche 1 bis 5, wenn die Spuren von Aminen Spuren von Diethylenglycolamin sind.

9. Verwendung von durch einen oder mehrere Tone agglomeriertem Zeolith als Adsorptionsmittel nach einem der Ansprüche 1 bis 5, wenn die Spuren von Aminen Spuren von Diethanolamin sind.


**Claims**

1. Use of zeolite A or X agglomerated with one or more clays of the kaolinite group as water-adsorbing agent for the drying of natural or synthetic acid gases comprising traces of amines and optionally traces of sodium hydroxide entrained from upstream deacidification units in a unit operating according to a series of thermal adsorption/desorption cycles.

2. Use of zeolite agglomerated with one or more clays as adsorbent according to Claim 1, **characterized in that** the zeolite is of 3A or 4A type.

3. Use of zeolite agglomerated with one or more clays as adsorbent according to Claim 1, **characterized in that** the zeolite is of X type.

4. Use of zeolite agglomerated with one or more clays as adsorbent according to any one of Claims 1 to 3, **characterized in that** the content of clay in the absorbent is between 5 and 50% by weight.

5. Use of zeolite agglomerated with one or more clays as adsorbent according to any one of Claims 1 to 4, **characterized in that** the clay is halloysite.

6. Use of zeolite agglomerated with one or more clays as adsorbent according to any one of Claims 1 to 5, when the said traces of amines are traces of diisopropanolamine.

7. Use of zeolite agglomerated with one or more clays as adsorbent according to any one of Claims 1 to 5, when the said traces of amines are traces of methyldiethanolamine.

8. Use of zeolite agglomerated with one or more clays as adsorbent according to any one of Claims 1 to 5, when the said traces of amines are traces of diethylene glycolamine.

9. Use of zeolite agglomerated with one or more clays as adsorbent according to any one of Claims 1 to 5, when the said traces of amines are traces of diethanolamine.